# EUROPEAN PATENT APPLICATION

(11) **EP 4 194 883 A1**
(43) Date of publication of application: **14.06.2023**
(21) Application number: 21213453.0
(22) Date of filing: 09.12.2021
(51) Int. Cl.: G01S 7/04, G01S 7/41, G01S 13/42, G01S 13/86, G01S 13/931, G01S 13/89, G06V 20/58

(54) **DEVICE AND METHOD FOR DETERMINING OBJECTS AROUND A VEHICLE**

(71) Applicant: Aptiv Technologies Limited, St. Michael (BB)
(72) Inventor: Meuter, Mirko, 40699 Erkrath (DE); Nunn, Christian, 42499 Hückeswagen (DE); SIEGEMUND, Jan, 50825 Köln (DE); KURIAN, Jittu, 42553 Velbert (DE); CENNAMO, Alessandro, 42275 Wuppertal (DE); BRAUN, Marco, 40225 Düsseldorf (DE); SPATA, Dominic, 58455 Witten (DE)
(74) Representative: Manitz Finsterwald Patent- und Rechtsanwaltspartnerschaft mbB

(57) **Abstract**

Device for determining objects around a vehicle, comprising a sensor unit comprising at least one radar sensor arranged and adapted to obtain radar image data of the external surroundings of the vehicle to deter-mine objects around the vehicle and a processing unit adapted to process the radar image data to obtain generate an top view image of the external surroundings of the vehicle indicating the relative position of the vehicle with respect to the determined objects, wherein the generated top view image is displayed on a display unit.

## Description

### FIELD

The present disclosure relates to devices and methods for determining objects around a vehicle.

### BACKGROUND

Digital imaging devices, such as digital cameras, are used in automotive applications to provide an image to the driver of the vehicle or to feed an autonomous driving unit. For parking applications, often bird's eye views are used to help the drivers to navigate their vehicle. Simple solutions use ultrasonic sensors to show obstacles as simple distance ring. The representation is sometimes difficult to interpret and does not look pleasant for the eye.

Another technique is to use data from multiple camera sensors and an algorithm on a processing device to combine the images of the cameras and to project them to some projective surface, e.g. a virtual ground plane. Then another projection is used to generate a top view of the environment (or a view from another angle) to show it on a display device to support the driver. These top views look nice and provide a lot of information, however, camera systems and corresponding camera and processing devices are expensive.

However, the projection of the camera image to a surface can lead to distortion artefacts, if objects above the ground are transformed onto the road surface assuming a flat world. More sophisticated algorithms can be used to recover the 3d structure of the scene, but these algorithms require more calculation time and may increase the price for the processing device.

Thus, there is a need for an improved device and method for determining objects around a vehicle. It is an object of the present disclosure to provide such an improved device and method for determining objects around a vehicle.

### SUMMARY

The present disclosure provides a device, a computer implemented method and a non-transitory computer readable medium according to the independent claims. Embodiments are given in the subclaims, the description and the drawings.

In one aspect, the present disclosure is directed at a device for determining objects around a vehicle. The device comprises a sensor unit which comprises at least one radar sensor. The radar sensor, may, for example, be arranged on the vehicle and is adapted to obtain radar image data of the external surroundings of the vehicle to determine objects around the vehicle. The device further comprises a processing unit, which is adapted to process the obtained radar image data to generate a top view image of the external surroundings of the vehicle indicating the relative position of the vehicle with respect to the determined objects. The generated image is visible to the human eye in top view of the vehicle.

The generated top view image is displayed on a display unit. The display unit may be part of the vehicle, in particular a display unit in the passenger compartment visible to the driver or a passenger of the vehicle. Alternatively, or additionally, the top view image may be transmitted, e.g. via a communication network, for display to a display unit of a portable device, such as, a mobile phone.

In an embodiment, other obtained information, as will be described below, may additionally be presented to a driver of the vehicle.

The device comprises a radar sensor, which may also be referred to as a radar device. The radar sensor is adapted to obtain radar image data. The sensor unit may comprise more than one radar sensor, for example two or more radar sensors, each covering a part of the external surroundings.

The device further comprises a processing unit, which may also be referred to as a processor or processing device, which is adapted to process the radar image data obtained from the one or more radar sensors and generate a top view of the external surroundings of the vehicle, indicating the relative position of the vehicle with respect to the determined objects.

The top view image of the vehicle may also be referred to as a bird's eye view of the vehicle. The external surroundings may also be referred to as the environment of the vehicle. In particular, the image may represent a top view of the vehicle itself and the target objects detected in the external surroundings of the vehicle. The top view image may be obtained by processing the radar image data using a suitable computer-implemented algorithm for image and/or coordinate transformation.

Thereby, a particularly user-friendly device is presented that may display, to a driver or a passenger of the vehicle, objects around the vehicle such as not to collide with the objects.

According to an embodiment, the sensor unit further comprises at least one other sensor, which is different from the radar sensor, and which is adapted to obtain other sensor data of the external surroundings of the vehicle. Therein, the processing unit is further adapted to process the obtained other sensor data to visually enhance the top view image of the external surroundings of the vehicle to be displayed on the display unit by combining the radar data obtained from the one more radar sensors with the data obtained by the one or more other sensors. As such, additional information may be displayed on the top view image indicative of one more parameters associated with the external environment and/or the vehicle such as highlighting detected objects, providing

To visually enhance in this context means for example to provide additional, in particular visible information to the image, in particular such information which would not be available from the radar image data alone.

In one embodiment, at least one of the other sensors may be a camera, which may be arranged on the vehicle and configured to monitor the external environment of the vehicle. The camera may for example be a CCD or a CMOS camera.

In another embodiment the one or more other sensors may be arranged on an object in the external surroundings of the vehicle, such as a lamp post, a building or a bollard on or near the road. For example, the one or more other sensors may communicate, via a communication network, to the processing unit of the vehicle data associated with the object it is attached to and/or the external surrounding of the object. The information communicated by the one or more sensors may be used to enhance the top-view image displayed to the driver.

Furthermore, the sensors of the sensor unit, radar sensor and other sensors, may form a sensor communication network, e.g. in an Internet of Things (loT) configuration. As such the sensors of the sensor unit may be placed at locations on the vehicle and/or on target objects, and further communicate the data obtained to the processing unit of the device for the generation of the top-view image to be displayed to the driver.

In one embodiment, the sensor may be a radar sensor, in particular, a radar sensor different from the radar sensor on the vehicle. In this example, the sensor may be arranged on an object in the external surroundings of the vehicle, such as, on an obstacle in a parking area.

In an embodiment, the sensor data may be processed to enhance the top view image in a way that the generated image contains schematic radar image data which are overlaid with real world image data from a camera.

In a further embodiment, the sensor data may be processed to visually enhance the image in a way that the image obtained from the radar image data is corrected and/or verified with data from a camera. In particular, the other sensor data from the other sensor may be used for geometric correction of the radar image data.

According to an embodiment, the radar sensor is arranged and adapted to obtain doppler data of the external surroundings of the vehicle. Therein, the processing unit is further adapted to process the obtained doppler data to visually enhance the top view image to be displayed on the display unit.

The doppler data may for example be used to obtain measurements, such as, for example, of distances to objects in the external surroundings of the vehicle.

According to an embodiment, the processing unit is further adapted to process other data. The other data is different from the radar image data, different from the other sensor data and different from the doppler data. Therein, the processing unit is adapted to process the other data to visually enhance the top view image of the external surroundings of the vehicle.

In one embodiment, the other data may, for example, be map data or navigation data stored in a storage.

In another embodiment, the other data may be, for example, odometry data or data being accumulated in the vehicle for other purposes.

According to an embodiment, the processing unit is further adapted to process radar image data obtained from multiple scans of the external surroundings of the vehicle to generate the top view image to be displayed on the display unit.

In an embodiment, the radar image data obtained from two or more scans may be used to correct errors in one or more sets of radar image data. The two or more scans may be collected over a predetermined amount of time.

In an embodiment, the radar image data from one or more scans may be used together with the other sensor data and/or the other data, such as odometry data, to identify stationary objects.

According to an embodiment, the processing unit is further adapted to use machine learning to visually enhance the top view image.

An enhancement may be an improvement of resolution of the image, a filtering of noise in the image and/or an improvement of visual quality, such as color correction and the like.

According to an embodiment, the processing unit is further adapted to use an image enhancement algorithm to visually enhance the top view image to be displayed on the display unit.

In an embodiment, the image enhancement algorithm may be used to generate a natural looking image of the external surroundings, in particular without using a sensor different from the radar sensor. An example for such an enhancement algorithm is Cycle Gan.

According to an embodiment, the processing unit is further adapted to process the obtained radar image data and/or the obtained other sensor data and/or the obtained doppler data and/or the other data to determine and visually highlight an unoccupied space in the external surroundings of the vehicle in the top view image to be displayed on the display unit.

An unoccupied space is a space in the external surroundings of the vehicle where no objects or obstacles are located, in particular, a space where it is safe for the vehicle to travel to. The unoccupied space may in particular be a parking spot.

According to an embodiment, the processing unit is further adapted to determine if the unoccupied space is sufficiently large enough for accommodating the vehicle.

Therefore, the processing unit is configured to process the obtained radar image data and/or the obtained other sensor data and/or the obtained doppler data and/or the other data to determine the size and/or dimensions of the unoccupied space.

Further, the processing unit has access to or knowledge of vehicle data such as length, width, turning circle, and the like, and is configured to calculate, based on the vehicle data, whether the vehicle will fit into the unoccupied space.

According to an embodiment, the processing unit is further adapted to process the obtained radar image data and/or the obtained other sensor data and/or the obtained doppler data and/or the other data to determine and visually highlight, on the generated image, an object in the external surroundings of the vehicle in the top view image to be displayed on the display unit.

Highlighting in this context means bringing to the attention of the driver through, for example, displaying the object in a different color and/or displaying a message. Highlighting may also comprise sounding an alarm.

In an embodiment, the processing unit is adapted to determine and visually highlight the height of an object.

In a further embodiment, the processing unit is adapted to determine and visually highlight, on the generated image, whether an object is moving or stationary.

An object may, for example, be another car, in particular, a moving and/or stationary car, an obstacle, in particular such an obstacle where it is not safe or allowed for the vehicle to travel, such as a sidewalk or a road boundary.

In an embodiment, the processing unit is adapted to determine a particular object in the path of the vehicle and highlight this issue to the driver, in particular by notifying the driver.

By enhancing the image and/or highlighting certain objects in the image, the determined objects and/or the external surroundings may be better visible to the driver.

According to an embodiment, the device further comprises an autonomous driving unit that communicatively coupled to the processing unit and that is adapted to control a movement of the vehicle based on input of the processing unit.

In an embodiment, the autonomous driving unit may use the obtained radar image data and/or the obtained other sensor data and/or the obtained doppler data and/or the other data to control and/or adjust the movement of the vehicle, in particular for a parking maneuver, navigation through construction zones or in slow traffic situation, such as, stop and go. Therefore, the autonomous driving unit may be in particular configured to position the vehicle in an unoccupied space.

Thereby, the vehicle may particularly safely perform autonomous driving functions.

In another embodiment, the obtained data and images are accumulated over time and stored. Based on this stored information, a deep network structure may be fed. The network structure may generate the parking information as one of multiple functionalities supported by one basic network structure and application specific heads generating different information of the same environment.

In another aspect, the present disclosure is directed at a computer implemented method for determining objects around a vehicle. Therein, the method comprises the step of obtaining radar image data of the external surroundings of the vehicle. The method further comprises the step of processing the radar image data to generate an image of the external surroundings of the vehicle, indicating the relative position of the vehicle with respect to the determined objects. The image is visible to the human eye in top view of the vehicle. The generated top view image is displayed on a display unit

According to an embodiment, the method further comprises the step of obtaining other sensor data of the external surroundings of the vehicle. The method further comprises the step of processing the other sensor data to visually enhance the top view image to be displayed on the display unit.

According to an embodiment, the method further comprises the step of obtaining doppler data of the external surroundings of the vehicle. The method further comprises the step of processing the doppler data to visually enhance the top view image to be displayed on the display unit.

According to an embodiment, the method further comprises the step of processing other data to visually enhance the top view image to be displayed on the display unit.

According to an embodiment, the method further comprises the step of processing radar image data from multiple scans to generate the image

According to an embodiment, the method further comprises the step of using machine learning to visually enhance the top view image to be displayed on the display unit.

According to an embodiment, the method further comprises the step of using an image enhancement algorithm to visually enhance the top view image to be displayed on the display unit.

According to an embodiment, the method further comprises the step of processing the obtained radar image data to determine and visually highlight an unoccupied space in the external surroundings of the vehicle in the top view image to be displayed on the display unit.

According to an embodiment, the method further comprises the step of processing the radar image data to determine and visually highlight an object in the external surroundings of the vehicle in the top view image to be displayed on the display unit.

According to an embodiment, the method further comprises the step of controlling a movement of the vehicle based on input of the processing unit

The embodiments of the device as described herein are particularly suitable to carry out several or all steps of the method as described herein. Likewise, the method as described herein may perform some or all functions of the device as described herein.

The embodiments of the device as described herein may further comprise at least one memory unit and at least one non-transitory data storage. The non-transitory data storage and/or the memory unit may comprise a computer program for instructing a computer to perform several or all steps or aspects of the method as described herein.

In another aspect, the present disclosure is directed at a vehicle comprising a device for determining objects around the vehicle according to one of the embodiments described herein.

According to an embodiment, the vehicle is an autonomous vehicle.

In another aspect, the present disclosure is directed at a non-transitory computer readable medium comprising instructions for carrying out several or all steps or aspects of the method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the method described herein.

For details of the embodiments of the method, the vehicle and the non-transitory computer readable medium, reference is made to the embodiments as described with reference to the device.

Through the embodiments as described herein, it is possible to generate a top view image of the external surroundings of the vehicle to support parking and other applications by showing the top view image representation of the environment on a display unit.

A radar sensor can provide a 360° field of view coverage. Alternatively, multiple radar sensor may be used. The image can look better compared to the distance ring ultrasonic sensor representation. The device can be considerably cheaper than a camera belt system. Radar sensors are available on many cars today and thus the function can be offered at lower costs. Finally, a radar can represent distances more accurately as it can measure distances directly and does not need to work based on projection surface assumptions.

### DRAWINGS

Exemplary embodiments and functions of the present disclosure are described herein in conjunction with the following drawings, showing schematically:
Fig. 1 a top view of an embodiment of a vehicle and a device for determining objects around a vehicle,
Fig. 2 a flow chart of a method for determining objects around a vehicle, and
Fig. 3 an image obtained through an embodiment of a device and method for determining objects around a vehicle.

In the figures, like numerals refer to same or similar features.

### DETAILED DESCRIPTION

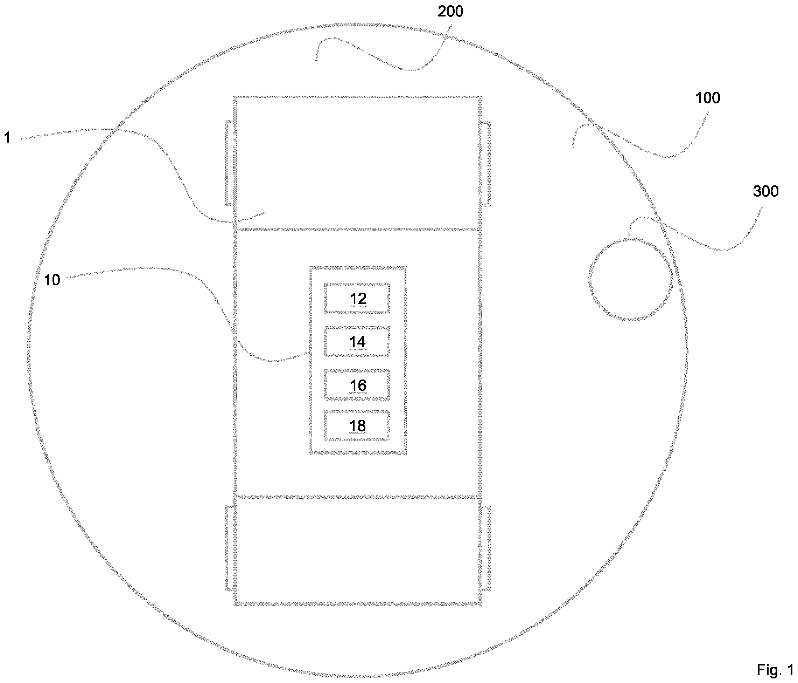

Fig. 1 depicts a top view of an embodiment of a vehicle 1 and a device 10 for determining objects 100 around a vehicle 1.

The device 10 comprises a radar sensor 12 arranged and adapted to obtain radar image data of the external surroundings 100 of the vehicle 1 to determine objects around the vehicle. The radar sensor may be part of a sensor unit (not shown). The device 10 further comprises a processing unit 14 adapted to process the radar image data to generate a top view image of the external surroundings 100 of the vehicle 1 visible to the human eye in top view of the vehicle and indicating the relative position of the vehicle with respect to the determined objects. The top view image is displayed on a display unit (not shown) by the processing unit 14.

The device 10 further comprises a sensor 16 arranged and adapted to obtain other sensor data of the external surroundings 100 of the vehicle 1, wherein the processing unit 14 is further adapted to process the other sensor data to visually enhance the image. The sensor 16 may be part of the sensor unit (not shown)

The radar sensor 12 is arranged and adapted to obtain doppler data of the external surroundings 100 of the vehicle 1 and the processing unit 14 is further adapted to process the doppler data to visually enhance the image.

The processing unit 14 is further adapted to process other data to visually enhance the image.

The processing unit 14 is further adapted to process radar image data from multiple scans to generate the image.

The processing unit 14 is further adapted to use machine learning and an image enhancement algorithm to visually enhance the image.

The processing unit 14 is further adapted to process the radar image data to determine and highlight an unoccupied space 200 in the external surroundings 100 of the vehicle 1 in the image.

The processing unit 14 is further adapted to process the radar image data to determine if the unoccupied space 200 is sufficiently large enough for accommodating the vehicle 1.

The processing unit 14 is further adapted to process the radar image data to determine and highlight an object 300 in the external surroundings 100 of the vehicle 1 in the image.

The device 10 further comprises an autonomous driving unit 18 that is adapted to control a movement of the vehicle 1 based on input of the processing unit 14.

For simplicity reasons, the device 10, the radar sensor 12, the other sensor 16, the processing unit 14 and the autonomous driving unit 18 are shown in Fig. 1 as being embodied on the roof of the vehicle. However, the device 10, the radar sensor 12, the other sensor 16, the processing unit 14 and the autonomous driving unit 18 may be embodied anywhere in or on the vehicle.

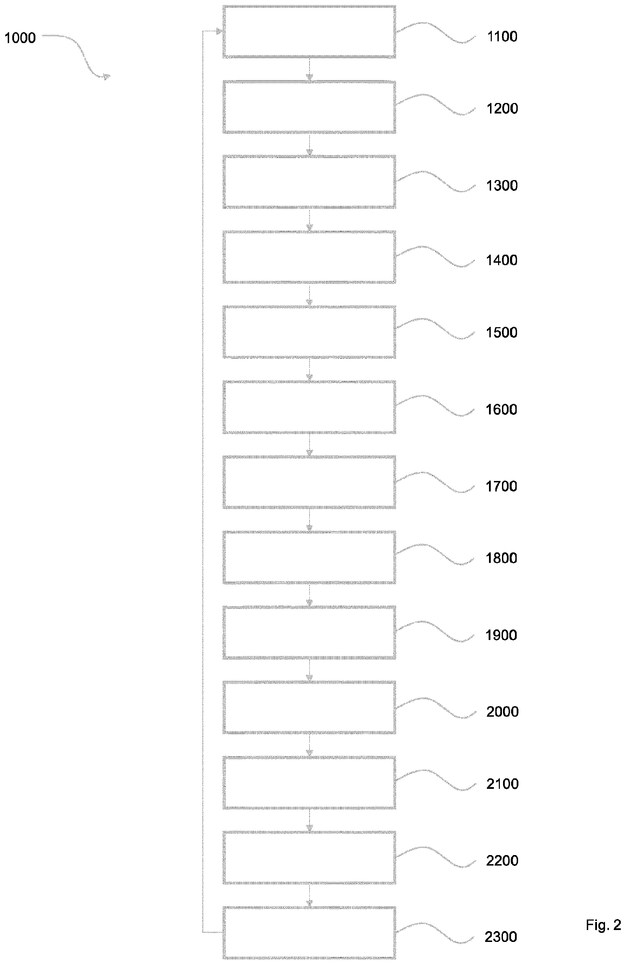

Fig. 2 depicts a flow chart of a method 1000 for determining objects around a vehicle.

In a first step 1100, radar image data of the external surroundings of the vehicle are obtained to determine objects around the vehicle.

In a next step 1200, the radar image data are processed to generate a top view image of the external surroundings of the indicating the relative position of the vehicle with respect to the determined objects.

In a further step 1300, other sensor data of the external surroundings of the vehicle are obtained.

In a next step 1400, the other sensor data are processed to visually enhance the top view image.

In another step 1500, doppler data of the external surroundings of the vehicle are obtained.

In a next step 1600 the doppler data are processed to visually enhance the top view image.

In a next step 1700, other data are processed to visually enhance the top view image.

In a further step 1800, radar image data are processed from multiple scans to obtain the top view image.

In another step 1900, machine learning is used to visually enhance the top view image.

In a further step 2000, an image enhancement algorithm is used to visually enhance the top view image.

In a further step 2100, the radar image data is processed to determine and highlight an unoccupied space in the external surroundings of the vehicle in the image.

In another step 2200, the radar image data are processed to determine and highlight an object in the external surroundings of the vehicle in the top view image.

In a last step 2300, a movement of the vehicle is controlled based on input of the processing unit.

In a further step (not shown) the generated top view image is displayed on a display unit.

All steps can be processed in a different order. The method 1000 can repeat itself continuously.

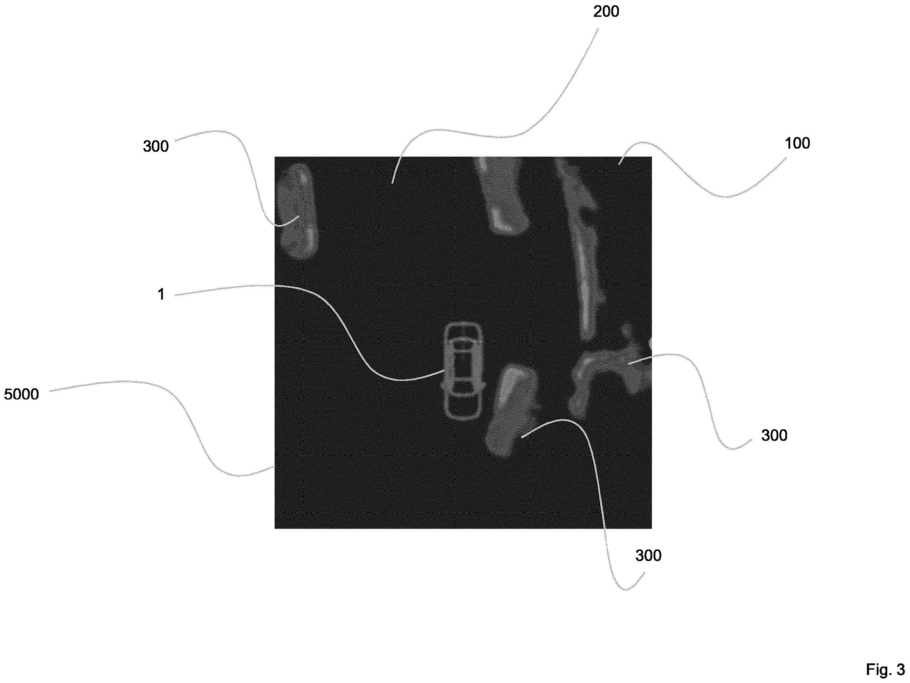

Fig. 3 depicts a top view image 5000 obtained through an embodiment of a device and method for determining objects around a vehicle 1.

As can be seen from the top view image 5000, the vehicle 1 is centered in the picture. In the external surroundings 100 of the vehicle 1, an unoccupied space 200 and objects 300 are visually highlighted.

This top view image 5000 can be displayed to a driver of the vehicle on a display unit of a portable device and/or of the vehicle.

### Reference numeral list

- 1: vehicle
- 10: device
- 12: radar
- 14: processing unit
- 16: other sensor
- 18: autonomous driving unit
- 100: external surroundings of the vehicle
- 200: unoccupied space
- 300: object
- 1000: method
- 1100: method step
- 1200: method step
- 1300: method step
- 1400: method step
- 1500: method step
- 1600: method step
- 1700: method step
- 1800: method step
- 1900: method step
- 2000: method step
- 2100: method step
- 2200: method step
- 2300: method step
- 5000: top view image

## Claims

1. A device for determining objects around a vehicle, comprising:
a sensor unit comprising at least one radar sensor arranged and adapted to obtain radar image data of the external surroundings of the vehicle to determine objects around the vehicle; and
a processing unit adapted to process the radar image data to generate a top view image of the external surroundings of the vehicle indicating the relative position of the vehicle with respect to the determined objects, wherein the generated top view image is displayed on a display unit.

2. A device according to the previous claim 1, wherein the sensor unit comprises:
one or more sensors arranged and adapted to obtain other sensor data of the external surroundings of the vehicle, and
wherein the processing unit is adapted to process the other sensor data to visually enhance the top view image to be displayed on the display unit.

3. A device according to any one of the preceding claims,
wherein the at least radar sensor is arranged and adapted to obtain doppler data of the external surroundings of the vehicle, and
wherein the processing unit is adapted to process the doppler data to visually enhance the top view image to be displayed on the display unit.

4. A device according to any one of the preceding claims,
wherein the processing unit is adapted to process radar image data obtained from multiple scans to generate the top view image to be displayed on the display unit.

5. A device according to any one of the preceding claims,
wherein the processing unit is adapted to process at least one of the radar image data and the other sensor data using at least one of a machine learning algorithm and an image enhancement algorithm to visually enhance the top view image to be displayed on the display unit.

6. A device according to any one of the preceding claims,
wherein the processing unit is adapted to process the radar image data to determine and highlight on the generated image at least one of an unoccupied space and one or more objects in the external surroundings of the vehicle in the top view image to be displayed on the display unit.

7. A device according to the preceding claim 6,
wherein the processing unit is adapted to process the radar image data to determine the dimensions of the detected uncopied space, and based on the determined dimensions determine if the unoccupied space is sufficiently large enough to accommodate the vehicle.

8. A device according to claim7,
further comprising an autonomous driving unit communicatively coupled to the processing unit and configured to control a movement of the vehicle based on input received from the processing unit, wherein the autonomous driving unit is configured to position the vehicle in a detected uncopied space upon receiving input from the processing unit indicating that the detected unoccupied space is sufficiently large to accommodate the vehicle.

9. A computer implemented method for determining objects around a vehicle, comprising the steps:
obtaining, by means of a sensor unit comprising at least one radar sensor,
radar image data of the external surroundings of the vehicle to determine objects around the vehicle;
processing, by means of a processing unit, the radar image data to generate a top view image of the external surroundings of the vehicle indicating the relative position of the vehicle with respect to the determined objects; and
displaying the generated top view image on a display unit.

10. A computer implemented method according to the preceding claim 9, further comprising the steps:
obtaining, by means of the sensor unit comprising one or more sensors,
other sensor data of the external surroundings of the vehicle, and
processing the other sensor data to visually enhance the top view image to be displayed on the display unit.

11. A computer implemented method according to any one of the preceding claims 9 or 10, further comprising the steps:
obtaining doppler data of the external surroundings of the vehicle, and
processing the doppler data to visually enhance the top view image to be displayed on the display unit.

12. A computer implemented method according to any one of the preceding claims 9 to 11, further comprising the step:
processing radar image data from multiple scans to generate the top view image to be displayed on the display unit.

13. A computer implemented method according to any one of the preceding claims 9 to 12, further comprising the step:
processing at least one of the radar image data and other sensor data using at least one of a machine learning algorithm and an image enhancement algorithm to visually enhance the image to be displayed on the display unit.

14. A computer implemented method according to any one of the preceding claims 9 to 13, further comprising the step:
processing the radar image data to determine and highlight on the generated image at least one of an unoccupied space and one or more objects in the external surroundings of the vehicle in the top view image to be displayed on the display unit.

15. Non-transitory computer readable medium comprising instructions for carrying out a computer implemented method according to any one of the preceding claims 9 to 14.
